Europäisches Patentamt

European Patent Office

Office européen des brevets

(11) Veröffentlichungsnummer : **0 064 675**
**B1**

(12) **EUROPÄISCHE PATENTSCHRIFT**

(45) Veröffentlichungstag der Patentschrift :
20.02.85

(21) Anmeldenummer : 82103654.8

(22) Anmeldetag : 29.04.82

(51) Int. Cl.⁴ : **H 01 M 10/39**

(54) **Wiederaufladbare galvanische Batterie.**

(30) Priorität : 08.05.81 DE 3118194

(43) Veröffentlichungstag der Anmeldung :
**17.11.82 Patentblatt 82/46**

(45) Bekanntmachung des Hinweises auf die Patenterteilung : **20.02.85 Patentblatt 85/08**

(84) Benannte Vertragsstaaten :
**BE FR GB IT NL**

(56) Entgegenhaltungen :
**DE-A- 2 529 513**
**DE-B- 2 513 649**

(73) Patentinhaber : **BROWN, BOVERI & CIE Aktiengesellschaft**
**Kallstadter Strasse 1**
**D-6800 Mannheim 31 (DE)**

(72) Erfinder : **Knödler, Reinhard, Dr.**
**Heinrich-Fuch-Strasse 122**
**D-6900 Heidelberg (DE)**

(74) Vertreter : **Kempe, Wolfgang, Dr. et al**
**c/o Brown, Boveri & Cie AG Postfach 351**
**D-6800 Mannheim 1 (DE)**

## Beschreibung

Die Erfindung betrifft eine wiederaufladbare galvanische Batterie mit flüssigem Natrium als negativem und flüssigem — in Graphit aufgesaugtem — Schwefel als positiven elektrochemischen Material sowie mit natriumionenleitenden Festelektrolyten, die ein metallisches Gehäuse aufweist.

Galvanische Natrium-Schwefel-Batterien sind vom Prinzip her bekannt (B. Fischer, H. Meinhold, Elektrische Energietechnik, 24, 1979, Seite 1 bis 6). Derartige Batterien bestehen im wesentlichen aus mehreren Einzelzellen, die mit dem Natriumionenleiter (Beta-$Al_2O_3$) in Form einseitig geschlossener Rohre aufgebaut sein können. Bei der in der Zelle verlaufenden Reaktion von Schwefel (Kathode) mit Natrium (Anode) wird elektrischer Strom erzeugt. Das Natrium (bzw. der Schwefel) kann hierbei sowohl im Inneren als auch im Äußeren des Rohres angeordnet sein, wobei das aus Beta-$Al_2O_3$ bestehende Rohr, das die Aufgabe des Elektrolyten erfüllt, als Separator zwischen dem negativem und positiven, aktivem Material ist. Der Schwefel ist hierbei gewöhnlich in einer Graphitmatrix aufgesaugt. Dieses Bauprinzip ergibt, daß Einzelzellen gebaut werden, und diese dann untereinander in Serie oder parallel elektrisch verschaltet werden. Die besagte Einzelbauweise erfordert relativ viel Platz und es wird für jede Zelle ein eigenes Gehäuse benötigt. Dies kann zur Folge haben, daß die volumetrische und gravimetrische Energiedichte verschlechtert wird. Eine Abhilfe wurde teilweise dadurch erreicht, daß das Zellenkonzept geändert wurde und entweder mehrere Rohre in ein gemeinsames äußeres Natrium-Reservoir gesteckt wurde (DE-PS 2 456 021) oder die Form der Keramik in Platten oder konzentrische Rohre abgeändert wurde (DE-PS 2 518 923). Diese Zellanordnungen sind jedoch mit dem Nachteil behaftet, daß die Stromführungswege zwischen den Zellen relativ lang sind, was sich zu beträchtlichen ohmschen Verlusten akkumulieren kann. Außerdem ist entweder die Form der Keramik oder die Art der elektrischen Verschaltung aufwendig, was zur erheblichen Kostensteigerung bei der Herstellung der Batterie führen kann.

Der vorliegenden Erfindung liegt die Aufgabe zugrunde, die Nachteile des bekannten Natrium/Schwefel-Batteriekonzeptes zu vermeiden.

Die gestellte Aufgabe wird erfindungsgemäß durch eine wiederaufladbare galvanische Batterie eingangs genannter Art dadurch gelöst, daß

a) die Batterie aus hintereinandergeschalteten und miteinander verbundenen Einzelzellen besteht, die aus jeweils einem Gehäuse und einem im Gehäuse koaxial angeordnetem Elektrolyten, mit dem es an beiden Enden verbunden ist, ausgebildet ist ;

b) jeweils zwei hintereinandergeschaltete Einzelzellen eine ungleichartige Anordnung des Natrium (Na) und des Schwefels (S), das bzw. der zwischen dem Gehäuse und dem Elektrolyten bzw. im Elektrolyten angeordnet sein kann, aufweisen und daß deren Elektrolyte durch eine Platte voneinander getrennt sind ;

c) abwechselnd, entweder zwischen den Gehäusen oder den Elektrolyten, der hintereinandergeschalteten Einzelzellen, eine elektrisch isolierende Verbindung ausgebildet ist.

Die vorgeschlagene Batterie besteht im wesentlichen aus mehreren durch Thermokompressionsdichtungen miteinander verbundenen Einzelzellen, bei denen das Positive/Negative elektrochemische Material abwechselnd zwischen dem Gehäuse der Batterie und dem Elektrolyten angeordnet ist, wobei die Elektrolyten voneinander durch elektrisch leitende/nichtleitende Platten getrennt sind.

Eine bevorzugte Ausbildung der erfindungsgemäßen Batterie besteht darin, daß das Gehäuse rohrartig und der Elektrolyt rohrförmig ausgebildet ist, wobei die elektrisch nicht leitende Verbindung zwischen den Einzelzellen durch Alfa-$Al_2O_3$-Ringe hergestellt wird und das Thermokomprimieren der Dichtungen der gesamten Anordnung in einem einzigen Arbeitsgang erfolgen kann. Durch die vorgeschlagene stromführende Verschaltung werden deren ohmsche Verluste minimiert und vernachlässigbar klein. Bei einer Verschaltung von mehreren Einzelzellen ergibt sich eine wesentliche, im Vergleich zu den bekannten Anordnungen, Verringerung des gesamten Volumens.

Weitere Vorteile und Merkmale der Erfindung gehen aus der folgenden Darstellung weiterer Einzelheiten sowie aus den Figuren zweier Ausführungsformen der Erfindung hervor.

Hierbei zeigen :

Figur 1  einen Axialschnitt durch eine Batterie,

Figur 2  eine weitere Ausführungsform der erfindungsgemäßen Batterie in Axialschnitt.

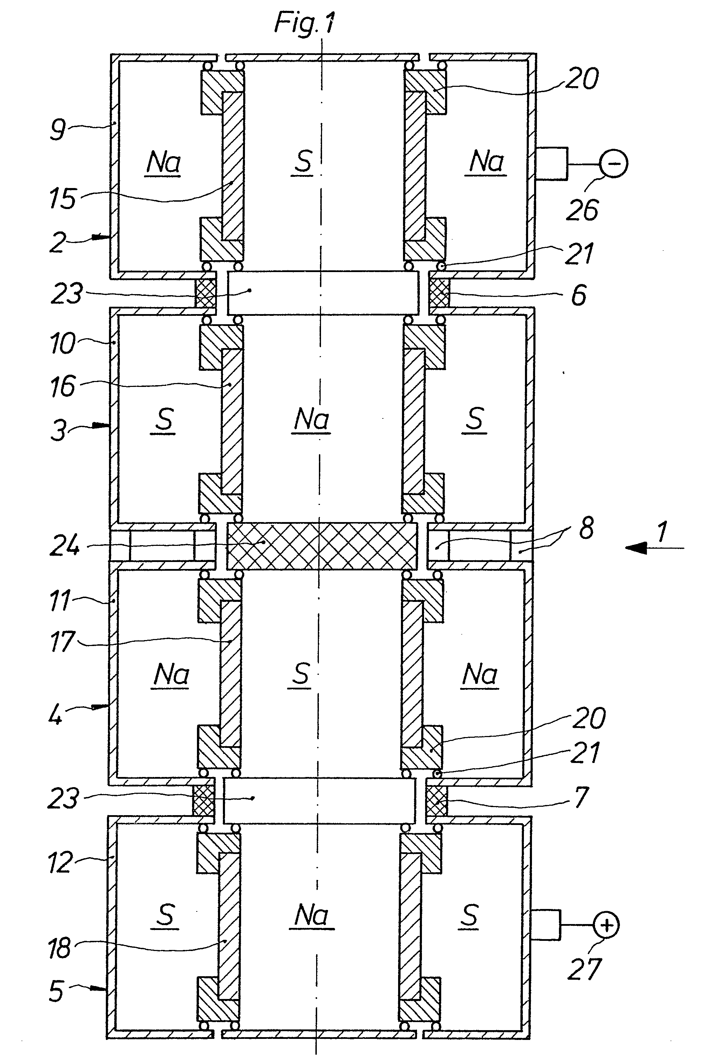

In Fig. 1 ist schematisch vereinfacht ein Schnitt durch eine erfindungsgemäße Batterie dargestellt. Sie ist für Arbeitstemperaturen von etwa 250 bis 400 Grad Celsius vorgesehen. Im vorliegenden Ausführungsbeispiel ist die Batterie aus vier Einzelzellen zusammengesetzt, die elektrisch hintereinandergeschaltet sind.

Die Batterie 1 besteht aus vier Einzelzellen 2, 3, 4, 5 die in Serie geschaltet und miteinander durch elektrischisolierende Verbindungen 6, 7, und eine elektrischleitende Verbindung 8 miteinander verbunden sind. Die dargestellte hermetische Verbindung wird durch Alfa-$Al_2O_3$-Ringe hergestellt, die mit den Gehäusen 9, 10 ; 11, 12 durch Thermokompression verbunden werden. Die Verbindung 8 zwischen den Gehäusen 10, 11 ist durch einen Al-Ring hergestellt. Die Elektrolyte 15, 16, 17, 18 sind in den Gehäusen 9, 10, 11, 12 koaxial angeordnet und über Ringe 20, die aus Alfa-$Al_2O_3$ bestehen, und über Ringe 21, die aus Al ausgebildet sind, mit den Gehäusen 9, 10, 11, 12 verbunden. Die Elektrolyte 15, 16, 17, 18 sind voneinander durch elektrisch leitende Platten 23 und eine elektrisch nichtleitende Platte 24 voneinander getrennt. Das Natrium (Na) bzw. der Schwefel (S) sind abwechselnd entweder zwischen dem Gehäuse 9 und dem Elektrolyten 15 oder im Elektrolyten 15 angeordnet. Hierbei ist der Elektrolyt 15 aus Beta-$Al_2O_3$ Rohren ausgebildet. Die Stromabnehmer 26, 27 sind seitlich angeordnet.

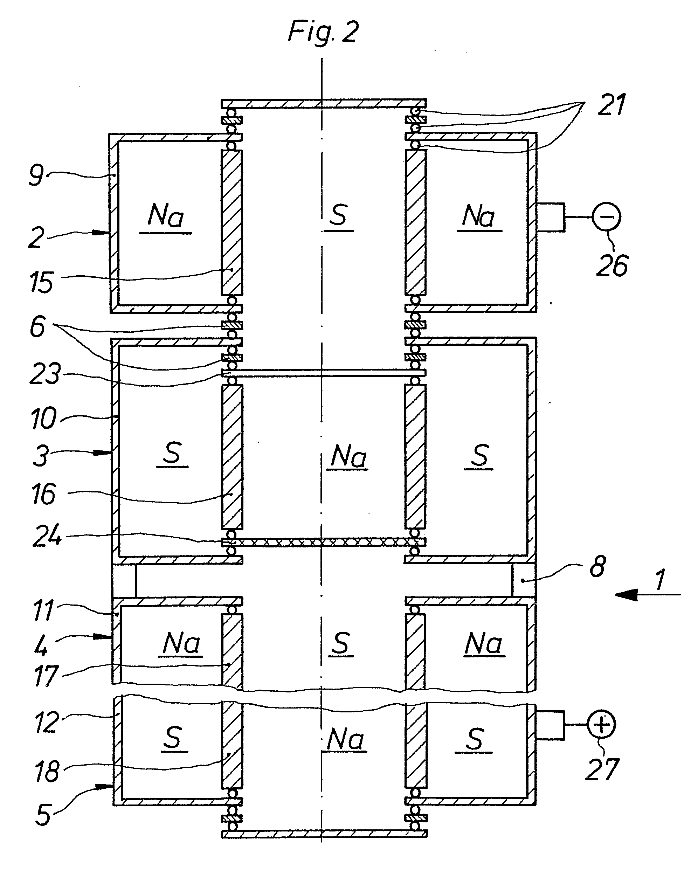

Bei der Anordnung in Fig. 2 ist, bei sonstigem gleichen Aufbau (gezeichnet sind hier aber nur zwei Zellen und das untere Ende), die Dichtungsart geändert. Die Elektrolyte 15, 16 weisen keine angeglasten Alfa-$Al_2O_3$-Ringe auf und sind direkt mit dem Gehäuse 9 bzw. mit den Platten 23, 24 verbunden. Zur elektrischen Isolierung werden an den besagten Stellen Ringe 6 aus Alfa-$Al_2O_3$ angeordnet. Zwischen der Natrium- und Schwefelelektrode kann kein elektrischer Kontakt entstehen, da auf Aluminium in Anwesenheit von Schwefel sofort gut isolierende Aluminiumsulfidschichten entstehen. Der Vorteil dieser Anordnung ist es, daß keine Anglasungsstellen mehr vorhanden sind (keine Korrosionsgefahr). Weiterhin kann man einen solchen Zellverband in einem einzigen Arbeitsgang herstellen.

## Ansprüche

1. Wiederaufladbare galvanische Batterie mit flüssigem Natrium als negativem und in Graphit aufgesaugtem flüssigem Schwefel als positiven elektrochemischen Material sowie mit natriumionenleitenden Festelektrolyten, die ein metallisches Gehäuse aufweist, dadurch gekennzeichnet, daß

a) die Batterie (1) aus hintereinandergeschalteten und miteinander verbundenen Einzelzellen (2, 3, 4, 5) besteht, die aus jeweils einem Gehäuse (9, 10, 11, 12) und einem im Gehäuse (9, 10, 11, 12) koaxial angeordnetem Elektrolyten (15, 16, 17, 18), mit dem es an beiden Enden verbunden ist, ausgebildet ist ;

b) jeweils zwei hintereinandergeschaltete Einzelzellen (2, 3 ; 3, 4 ; 4, 5) eine ungleichartige Anordnung des Natriums (Na) und des Schwefels (S), das bzw. der zwischen dem Gehäuse (9) und dem Elektrolyten (15) bzw. im Elektrolyten (15) angeordnet ist, aufweisen und daß deren Elektrolyte (15, 16) durch eine Platte (23) voneinander getrennt sind ;

c) abwechselnd, entweder zwischen den Gehäusen (9, 10 ; 11, 12) oder den Elektrolyten (16, 17) der hintereinandergeschalteten Einzelzellen (2, 3, 4, 5), eine elektrisch isolierende Verbindung (6, 7) ausgebildet ist.

2. Galvanische Batterie nach Anspruch 1, dadurch gekennzeichnet, daß das Gehäuse (9) rohrartig und der Elektrolyt (15) rohrförmig ausgebildet ist.

3. Galvanische Batterie nach Anspruch 1 bis 2, dadurch gekennzeichnet, daß die Einzelzellen (2, 3, 4, 5) durch Thermokompressionsdichtungen miteinander verbunden sind, wobei die elektrisch nichtleitende Verbindungen (6, 7) einen Alfa-$Al_2O_3$-Ring aufweisen.

4. Galvanische Batterie nach Anspruch 1 bis 3, dadurch gekennzeichnet, daß die Platten (23) über Al-Ringe (21) mit dem Elektrolyten (16) verbunden sind, wobei die elektrisch nichtleitenden Platten (24) auch mit dem Gehäuse (10) verbunden sind.

5. Galvanische Batterie nach Anspruch 1 bis 3, dadurch gekennzeichnet, daß die Elektrolyten (15, 16, 17, 18) an ihren Enden angeglaste Alfa-$Al_2O_3$-Ringe (20) aufweisen, über die die Elektrolyten (15, 16, 17, 18) mit den Platten (23, 24) und den Gehäusen (9, 10, 11, 12) verbunden sind.

## Claims

1. Rechargeable voltaic battery with liquid sodium as the negative electrochemical material and liquid sulphur, absorbed in graphite, as the positive electrochemical material, and with solid electrolytes which conduct sodium ions, having a metal casing, characterised in that

a) the battery (1) consists of series-arranged and mutually connected individual cells (2, 3, 4, 5) which are each formed from a casing (9, 10, 11, 12) and an electrolyte (15, 16, 17, 18) which is arranged coaxially in the casing (9, 10, 11, 12) and is connected thereto at both ends,

b) two series-arranged individual cells (2, 3 ; 3, 4 ; 4, 5) have in each case a different arrangement of the sodium (Na) and the sulphur (S) arranged between the casing (9) and the electrolyte (15) or in the electrolyte (15), and that their electrolytes (15, 16) are separated from one another by a plate (23), and

c) alternately, either between the casings (9, 10 ; 11, 12) or the electrolytes (16, 17) of the series-arranged individual cells (2, 3, 4, 5), an electrically insulating connection (6, 7) is formed.

2. Voltaic battery according to Claim 1, characterised in that the casing (9) is in the form of a tube and the electrolyte (15) is tubular.

3. Voltaic battery according to Claim 1 to 2, characterised in that the individual cells (2, 3, 4, 5) are mutually connected by thermo-compression seals, the electrically non-conductive connections (6, 7) having a $\alpha$-$Al_2O_3$ ring.

4. Voltaic battery according to Claim 1 to 3, characterised in that the plates (23) are connected via Al rings (21) to the electrolyte (16), the electrically non-conducting plates (24) being also connected to the casing (10).

5. Voltaic battery according to Claim 1 to 3, characterised in that the electrolytes (15, 16, 17, 18) have $\alpha$-$Al_2O_3$ rings (20) which are incipiently gazed at their ends and which are connected via the electrolytes (15, 16, 17, 18) to the plates (23, 24, 25) and the casings (9, 10, 11, 12).

## Revendications

1. Batterie galvanique rechargeable renfermant du sodium liquide en tant que substance électrochimique négative et du soufre liquide absorbé par du graphite en tant que substance électrochimique positive, ainsi que des électrolytes solides conducteurs des ions sodium, et présentant un boîtier métallique, caractérisée par le fait que

a) la batterie (1) se compose d'éléments individuels (2, 3, 4, 5) qui sont branchés les uns derrière les autres, sont reliés les uns aux autres et consistent à chaque fois en un boîtier (9, 10, 11, 12) et en un électrolyte (15, 16, 17, 18) disposé coaxialement dans ledit boîtier (9, 10, 11, 12) auquel il est relié par ses deux extrémités ;

b) deux éléments individuels respectifs (2, 3 ; 3, 4 ; 4, 5) branchés l'un derrière l'autre présentent un agencement dissemblable du sodium (Na) et du soufre (S), lequel se trouve entre le boîtier (9) et l'électrolyte (15) ou dans cet électrolyte (15), respectivement, et les électrolytes (15, 16) desdits éléments étant séparés l'un de l'autre par une plaque (23) ;

c) une jonction (6, 7) électriquement isolante est réalisée alternativement, soit entre les boîtiers (9, 10 ; 11, 12), soit entre les électrolytes (16, 17) des éléments individuels (2, 3, 4, 5) branchés les uns derrière les autres.

2. Batterie galvanique selon la revendication 1, caractérisée par le fait que le boîtier (9) est réalisé à la manière d'un tube et l'électrolyte (15) présente une forme tubulaire.

3. Batterie galvanique selon les revendications 1 et 2, caractérisée par le fait que les éléments individuels (2, 3, 4, 5) sont reliés les uns aux autres par des garnitures d'étanchéité thermocompressibles, les jonctions (6, 7) électriquement non conductrices comportant une bague du type alpha-$Al_2O_3$.

4. Batterie galvanique selon les revendications 1 à 3, caractérisée par le fait que les plaques (23) sont raccordées à l'électrolyte (16) par l'intermédiaire de bagues (21) du type Al, les plaques (24) électriquement non conductrices étant également reliées au boîtier (10).

5. Batterie galvanique selon les revendications 1 à 3, caractérisée par le fait ques les électrolytes (15, 16, 17, 18) présentent, à leurs extrémités, des bagues (20) du type alpha-$Al_2O_3$ vitrifiées, par l'intermédiaire desquelles les électrolytes (15, 16, 17, 18) sont reliés aux plaques (23, 24) et aux boîtiers (9, 10, 11, 12).

## Fig.1

Fig. 2